(19) Europäisches Patentamt

European Patent Office

Office européen des brevets

(11) **EP 1 245 995 A2**

(12) **EUROPEAN PATENT APPLICATION**

(43) Date of publication:
**02.10.2002 Bulletin 2002/40**

(51) Int Cl.7: **G02F 1/13363**, G02F 1/1335, G02F 1/139

(21) Application number: **02007411.8**

(22) Date of filing: **28.03.2002**

(84) Designated Contracting States:
**AT BE CH CY DE DK ES FI FR GB GR IE IT LI LU MC NL PT SE TR**
Designated Extension States:
**AL LT LV MK RO SI**

(30) Priority: **30.03.2001 JP 2001098658**

(71) Applicant: **MATSUSHITA ELECTRIC INDUSTRIAL CO., LTD.**
**Kadoma-shi, Osaka-fu (JP)**

(72) Inventors:
• **Nishiyama, Kazuhiro**
  **Hirakata-shi, Osaka-fu (JP)**

• **Sato, Ichiro**
  **Kyotanabe-shi, Kyoto-fu (JP)**
• **Ogawa, Shinji**
  **Neyagawa-shi, Osaka-fu (JP)**
• **Yamakita, Hiroyuki**
  **Osaka-shi, Osaka-fu (JP)**

(74) Representative: **Grünecker, Kinkeldey, Stockmair & Schwanhäusser Anwaltssozietät**
**Maximilianstrasse 58**
**80538 München (DE)**

(54) **Liquid crystal display device**

(57)    A liquid crystal display device comprises two substrates (111, 134), two electrodes (115, 133) arranged between the substrates (111, 134), a liquid crystal layer (120) disposed between the electrodes (115, 133) and having a retardation when giving a black display, and retardation layers (116, 132) positioned between the liquid crystal layer (120) and the substrates (111, 134). The sum of the retardation value of the liquid crystal layer (120) and the retardation values of the retardation layers (116, 132) is approximately zero for light incident on the substrate (134) when a voltage for giving the black display is applied across the electrodes (115, 133).

Fig.1

## Description

### TECHNICAL FIELD

The present invention relates to liquid crystal display device, and more particularly to those of OCB (optically compensated birefringence) liquid crystal mode.

### BACKGROUND ART

Liquid crystal panels are in wide use as monitors for word processors, computers and the like, as TV sets of the projection type, portable compact TV sets and as light controlling devices such as optical switching devices. Typical of liquid crystal panels are those incorporating a twisted nematic (TN) liquid crystal or vertically aligned (VA) liquid crystal.

On the other hand, the publication of U.S. Patent No. 4,556,758 (hereinafter referred to as "publication No. 758") discloses a pi cell (or $\pi$ cell) which is responsive to variations in the external electric field at a higher speed than conventional liquid crystal materials, namely, which is as high as about 2 msec in switching speed, so that research and development efforts are made in recent years for the application of such cells to devices for displaying motion video pictures. The liquid crystal panel wherein the pi cell is used is termed a liquid crystal panel of OCB liquid crystal mode (hereinafter referred to as an "OCB liquid crystal panel").

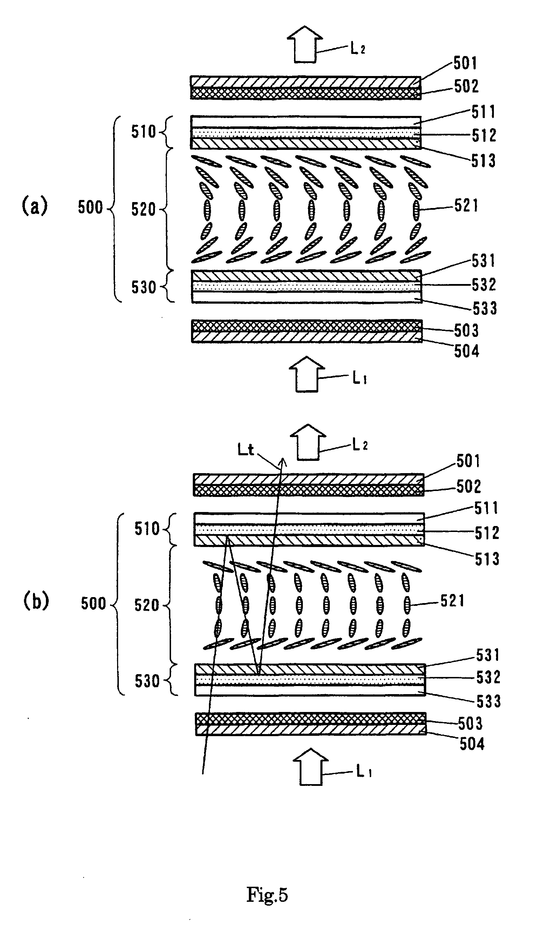

FIGS. 5, (a) and (b) are sectional views schematically showing a liquid crystal display device comprising an OCB liquid crystal panel. The OCB liquid crystal panel 500 comprises an emergent-side substrate assembly 510 composed of a glass substrate 511, a transparent electrode 512 and an alignment film 513; an incident-side substrate assembly 530 composed of an alignment film 531, a transparent electrode 532 and a glass substrate 533; and a liquid crystal layer 520 sandwiched between these substrate assemblies and having liquid crystal molecules 521 which are brought into a bend alignment when subjected to an initialization voltage by a power source (not shown). The OCB liquid crystal panel 500 is further sandwiched between a polarizer 501 and a retardation film 502 which are on the emergent side, and a polarizer 504 and a retardation film 503 which are on the incident side to provide a liquid crystal cell for giving displays. The two polarizers 501, 504 are arranged with their polarizing axes positioned orthogonal to each other. (This arrangement will hereinafter be referred to as a "cross Nicol" arrangement.)

FIG. 5,(a) shows the display device in a state obtained by applying an initialization voltage (about 25 V) in the form of pulses across the transparent electrodes 512 and 532 to bring the liquid crystal molecules 521 into a bend alignment and thereafter applying a relatively low voltage (about 2.5 V) thereacross. When incident light L1 having no particular polarization properties is incident on the indent-side substrate assembly 530, the light passing through the polarizer 504 becomes linearly polarized light, which is incident on the liquid crystal layer 520. The light linearly polarized by the polarizer 504 undergoes birefringence when passing through the liquid crystal layer 520 in the bend alignment state, whereby a phase difference occurs in the light to elliptically polarize the light. Accordingly, in the case where a voltage is applied across the transparent electrodes 512 and 532 so that the light passing through the liquid crystal layer 520 is rotated through approximately 90 degrees about the polarizing axis of the polarizer 504 to become linearly polarized light, the light almost entirely passes through the polarizer 501 which is arranged in the cross Nicol relation with the polarizer 504, and is output as emergent light L2. The state shown in FIG. 5,(a) corresponds to a display of "white", which is termed a "normally white display".

Next, when a voltage (about 7.0 V) higher than the above-mentioned low voltage is applied across the transparent electrodes 512 and 532, the liquid crystal molecules 521 are altered in alignment in accordance with the external electric field. FIG. 5, (b) shows a state obtained when a predetermined voltage is applied across the transparent electrodes 512 and 532 so that the liquid crystal molecules 521 in the central portion of the layer 520 are aligned perpendicular to the glass substrate 511, etc. The molecules 521 in the central portion of the liquid crystal layer 520 are almost all oriented in a direction perpendicular to the glass substrate 511, etc., whereas the liquid crystal molecules 521 in the vicinity of the boundary between the layer 520 and the alignment film 513 or 531 are generally parallel to, or inclined at an angle of several degrees to about 30 degrees with, the glass substrate 511, etc. due to the restraining force of the interface. When light L1 is incident on the incident-side substrate assembly 530 in this state, the incident light L1 is linearly polarized by the polarizer 504 as in the foregoing case, but the passage of the light through the liquid crystal layer 520 produces little or no phase difference. Accordingly, the polarization plane of the light passing through the layer 520 remains nearly orthogonal to the polarizing axis of the polarizer 501, and the light is unable to pass through the plate 501. This state shown in FIG. 5, (b) corresponds to a display of "black".

The alignment of the liquid crystal molecules 521 can be altered by varying the level of the voltage to be applied across the transparent electrodes 512 and 532. This varies the phase difference of the light passing through the liquid crystal layer 520 in accordance with the applied voltage to vary the long-axis direction of elliptical polarization and vary the quantity of light passing through the polarizer 501. Consequently, the OCB liquid crystal panel 500 is made usable as a multigradation display panel.

In actuality, components other than the liquid crystal layer 520 cause rotation of the polarization plane.

The liquid crystal display device usually comprises the retardation films 502 and 503 which give a phase difference opposite to the phase difference due to the liquid crystal layer 520. In the state corresponding to the "black" display shown in FIG. 5, (b), the device is so designed that the overall phase difference resulting from the retardation films 502, 503 and the liquid crystal layer 520 is about zero degree, namely, that the retardation value which corresponds to the phase difference calculated as distance in view of the wavelength is about 0 nm (nano-meter). For example, if the retardation value of the liquid crystal layer 520 for the light incident on the OCB liquid crystal panel 500 perpendicular thereto is 80 nm, the retardation films 502 and 503 are each designed to have a retardation value of -40 nm. In giving a white display, the retardation value of the liquid crystal layer 520 due to birefringence is about 355 nm, and the liquid crystal display device is then 275 nm (= -40 nm + 355 nm - 40 nm) in overall retardation. The OCB liquid crystal panel 500 can be made to serve as a multigradation display panel by varying this retardation in accordance with the voltage to be applied across the transparent electrodes 512 and 532.

Since the retardation value is in proportion to the optical path length which is the distance light travels, the light obliquely incident on the plane of the OCB liquid crystal panel 500 is longer than the light impinging thereon perpendicular thereto in the optical path length inside the panel 500 and greater in retardation value than is the case with the perpendicular incident light. Accordingly, the refractive index of the retardation films 502 and 503 is so designed as to have a three-dimensional distribution, such that the overall retardation value of the liquid crystal layer 520 and the retardation films 502, 503 is zero also for oblique light in the state shown in FIG. 5, (b).

It is common practice to dispose the retardation film 503 for the incident light L1 and the retardation film 502 for the emergent light L2 for optical compensation as stated above so as to eliminate leakage of light and obtain improved contrast for the black display.

However, the OCB liquid crystal panel 500 has a multilayer structure which involves multi-reflection at the interfaces between the component layers, there exists an optical path which is not zero in overall retardation even in the state of black display shown in FIG. 5, (b), light leaks from the polarizer 501, hence the resulting problem of lower contrast.

The usual optical path is such that the incident light L1 passes through the incident-side substrate assembly 530, the liquid crystal layer 520 and the emergent-side substrate assembly 510 and emerges as the emergent light L2. As disclosed in the publication of PCT/WO No. 01/09673 (hereinafter referred to as "publication No. 673"), there exists light Lt which passes through the liquid crystal layer 520 three times. For example, the light passing through the liquid crystal layer 520 once is reflected at an ITO surface, a color filter layer surface or a black matrix surface (none of these shown) of the emergent-side substrate assembly 510, returns to the liquid crystal layer 520, is further reflected, for example, from an ITO or wiring of the incident-side substrate assembly 530, impinges on the liquid crystal layer 520 again and emerges from the emergent side. When a black display is provided, the light thus internally reflected is subjected to birefringence by the incident-side retardation film 503 once, by the liquid crystal layer 520 three times and by the emergent-side retardation film 502 once. The OCB liquid crystal panel 500 is usually so designed as to give the black display when light is subjected to birefringence by the incident-side retardation film 503 once, by the liquid crystal layer 520 once and by the emergent-side retardation film 502 once. In the above-mentioned case of internal reflection, therefore, the overall optical path is other than zero in retardation value because the light passes through the liquid crystal layer 520 twice excessively, with the result that the internally reflected light passes through the polarizer 501 to emerge as the emergent light L2, consequently failing to give a satisfactory black display on the screen of the panel 500 and entailing impaired contrast. The liquid crystal layer 520 and the retardation films 502, 503 give the light Lt in the foregoing case a retardation value of 160 nm (= -40 nm + 80 nm $\times$ 3 -40 nm) which is other than the retardation value of (0 nm) primarily desired for providing the black display.

Although this problem will be encountered, for example, in the TN liquid crystal mode or VA liquid crystal mode in the case where front leakage of light is compensated for by retardation films or the like, the problem becomes especially pronounced with the OCB liquid crystal panel wherein front leakage of light in the black display is compensated for by the retardation film.

In the case where the light obliquely incident on the OCB liquid crystal panel 500 is scattered, for example, by a color filter layer and then impinges on the emergent-side retardation film 502 perpendicular thereto, the retardation value of the overall optical path is not zero but leakage of light occurs to entail the problem of reduced contrast.

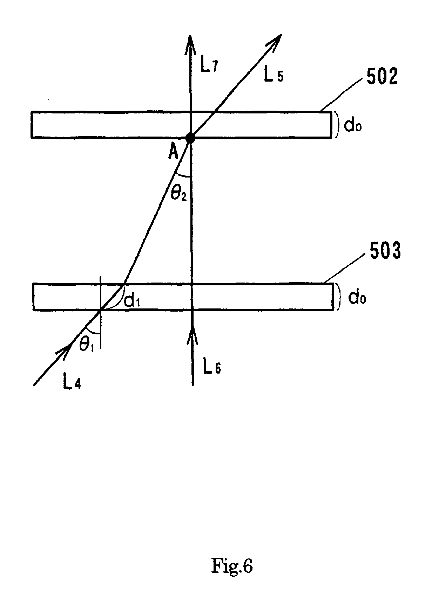

FIG. 6 shows the path of light obliquely incident on the OCB liquid crystal panel 500 shown in FIG. 5. This diagram shows the retardation film 502 and 503 but the other layers including the liquid crystal layer 520 are omitted to clearly show the path of light. The light along the optical path L4 to L5 first impinges on the retardation film 503 at an angle of incidence of θ1, is then incident on the liquid crystal layer 520 (not shown in FIG. 6) from the retardation film 503 and thereafter passes through the liquid crystal layer at an angle of transmission θ2 with respect to the retardation film 502. Subsequently, the light impinges on the retardation film 502 from the liquid crystal layer and eventually emerges from the retardation film 502 at the same angle as the angle of incidence of θ1 with the retardation film 502. Incidentally as shown in FIG. 6, the angle of incidence θ1 and the angle of transmission θ2 are each defined as an angle between the light L and an axis perpendicular to the retardation film 502 or 503.

As described above, the refractive index of the retardation films 502 and 503 is so designed that when light passes through the optical path L4 to L5, the overall retardation value will be nearly zero. Thus,

$$\alpha1 + 2\Delta n \cdot d1 = 0 \qquad (1)$$

wherein $\alpha1$ is the retardation value of the liquid crystal layer 520 in the path L4 to L5, and $\Delta n \cdot d1$ is the retardation value of the retardation film 502 or 503 in the case where the retardation films 502 and 503 have the same thickness, each have an optical path length of d1 and are each $\Delta n$ in the difference between refractive indices thereof for normal light and abnormal light. Similarly, the refractive index is so designed that the overall retardation value of the path L6 to L7 for perpendicular light will be zero. Thus,

$$\alpha0 + 2\Delta n \cdot d0 = 0 \qquad (2)$$

wherein $\alpha0$ is the retardation value of the liquid crystal layer 520 in the path L6 to L7, and $\Delta n \cdot d0$ is the retardation value of the retardation film 502 or 503 when the retardation films 502 and 503 each have a thickness of d0.

For example, when the incident light L4 is scattered at point A and emerges as an emergent light L7, the overall retardation value R of the optical path L4 to L7 is $R = \Delta n \cdot d1 + \alpha1 + \Delta n \cdot d0$, and $R = \Delta n \cdot (d0 - d1)$ in view of the above Equations (1) and (2). Accordingly, the overall retardation value R of the path L4 to L7 is not zero, and the light incident on the polarizer 501 is elliptically polarized light, entailing leakage of light. Stated more specifically, the light is scattered forwardly by the ITO, the color filter layer, the overcoat layer, etc. of the emergent-side substrate assembly 510 while passing through the OCB liquid crystal panel 500, with a portion of light passing through the glass substrate 511 in a direction normal to the plane thereof. This light portion passes through the retardation film 502 perpendicular thereto which retardation film is disposed externally of the substrate 511 to thereby result in lower front contrast. This phenomenon is also a problem unique to the OCB liquid crystal mode wherein the front leakage of light involved in the black display is compensated for by retardation films.

Backlight is provided usually by a diffusion light source in liquid crystal monitors, liquid crystal TV sets, etc., therefore naturally includes oblique incident light and encounters the above problem, whereas even if a parallel light source is used, the light is scattered variously while passing through the incident-side substrate assembly, and a portion of light will obliquely pass through the liquid crystal panel. If this light portion emerges obliquely with respect to the substrate, front contrast will not be impaired, but perpendicular emergence leads to reduced front contrast.

In the case where the contrast of liquid crystal panels is defined as the ratio of the transmittance (quantity of transmitted light) in giving the white display to the transmittance (quantity of transmitted light) in giving the black display, the front contrast of the liquid crystal cell in the OCB liquid crystal mode wherein retardation films are used is about 500 to about 800 in the case where the liquid crystal panel comprises, for example, a glass substrate, an alignment film, an ITO and liquid crystal. However, with liquid crystal display panels comprising a retardation film, a TFT, a color filter, etc. and fabricated for use as monitors or TV sets, the contrast is as low as about 100 to about 200.

DISCLOSURE OF THE INVENTION

An object of the present invention is to provide a liquid crystal display device wherein leakage of light is diminished that would entail lower contrast in the OCB liquid crystal mode described and which is useful for realizing display panels and optical switching panels of high contrast having a TFT and a color filter incorporated therein.

To fulfill the above object, the present invention provides as a first feature thereof a liquid crystal display device comprising two substrates, two electrodes arranged between the substrates, a liquid crystal layer disposed between the electrodes and having a retardation value when giving a black display, and at least one retardation layer positioned between the substrate and the liquid crystal layer, the device being characterized in that the sum of the retardation value of the liquid crystal layer and the retardation values of the retardation layers is approximately zero for light incident on the substrate when a voltage for giving the black display is applied across the electrodes. The liquid crystal display device is adapted to reduce the leakage of light due to the internal reflection of the incident light when giving the black display and to diminish the impairment of front contrast. This feature makes it possible to provide devices of very high contrast including liquid crystal monitors, liquid crystal TV sets, display devices for use in vehicles and portable display devices for mobile or portable telephones. The invention also gives optical switching devices higher contrast, therefore improved ON- and OFF-characteristics and enhanced reliability.

For example, the liquid crystal layer can be a liquid crystal layer comprising liquid crystal molecules in an OCB mode. The liquid crystal molecules in this mode are in a splay alignment in the absence of applied voltage. Before displaying images, the liquid crystal layer is subjected to an initialization voltage for the transition to a bend alignment, and the molecules in this bend alignment state provide display of images.

Preferably, the liquid crystal display device of the invention comprises two alignment films having the liquid crystal layer sandwiched therebetween, and the above-mentioned at least one retardation layer is disposed adjacent to the alignment film at one side thereof not in contact with the liquid crystal layer.

Preferably the retardation layer is a color filter layer.

The above-mentioned at least one retardation layer is preferably an overcoat layer.

The above-mentioned at least one retardation layer is preferably a flattening layer.

The above-mentioned at least one retardation layer is preferably an alignment film.

Preferably, the liquid crystal display device comprises two retardation layers, each of the retardation layers being disposed adjacent to each of the alignment films at one side thereof not in contact with the liquid crystal layer.

Alternatively, the present invention provides as a first feature thereof a liquid crystal display device comprising two substrates, two electrodes arranged between the substrates, and a liquid crystal layer disposed between the electrodes and having a retardation when giving a black display. The sum of the retardation value of the liquid crystal layer and the retardation values of the electrodes is approximately zero for light incident on the substrate when a voltage for giving the black display is applied across the electrodes. This device has the same advantage as the foregoing device.

To fulfill the above object, the present invention provides as a second feature thereof a liquid crystal display device comprising two substrates, two electrodes arranged between the substrates, a liquid crystal layer disposed between the electrodes and having a retardation when giving a black display, a retardation layer, and a color filter layer disposed between the liquid crystal layer and the retardation layer, the device being characterized in that the color filter layer comprises a pigment dispersed therein, the pigment being in the form of aggregate particles at least 0.01 μm (micro-meter) to not greater than 0.1 μm in size.

The liquid crystal display device according to the second feature of the invention is adapted to reduce scattering of oblique incident light toward the forward direction. This feature makes it possible to provide devices of very high contrast including liquid crystal monitors, liquid crystal TV sets, display devices for use in vehicles and portable display devices for mobile or portable telephones. The invention also gives optical switching devices higher contrast, therefore improved ON- and OFF-characteristics and enhanced reliability.

A color filter layer comprising a dye may be used in place of the color filter layer comprising the dispersed pigment, whereby the same advantage as the device of the second feature is available.

To accomplish the foregoing object, the present invention provides as a third feature thereof a liquid crystal display device comprising two substrates, two electrodes arranged between the substrates, a liquid crystal layer disposed between the electrodes and having a retardation when giving a black display, a retardation layer, a backlight, and light control means for controlling the direction of radiant light from the backlight, the device being characterized in that the light control means controls the direction of the radiant light so that the total quantity of incident light having an angle of incidence within the range of at least a predetermined angle to not greater than 90 degrees, with respect to the direction of a normal to the first of the substrates disposed closer to the backlight is less than the total quantity of light having an angle of incidence with respect to said direction of the normal within the range of at least 0 degree to less than the predetermined angle, the predetermined angle being at least 0 degree to not greater than 30 degrees. The liquid crystal display device according to the third feature of the invention is adapted to reduce the quantity of light component in such a direction that will lead to impaired front contrast. This feature makes it possible to provide devices of very high contrast including liquid crystal monitors, liquid crystal TV sets, display devices for use in vehicles and portable display devices for mobile or portable telephones. The invention also gives optical switching devices higher contrast, therefore improved ON- and OFF-characteristics and enhanced reliability.

Preferably, the light control means controls the direction of the radiant light so that the total quantity of incident light which is within the range of at least the predetermined angle to not greater than 90 degrees in said angle of incidence which is within a first plane containing the direction of alignment of the liquid crystal and perpendicular to the first substrate is less than the total quantity of incident light which is within the range of at least the predetermined angle to not greater than 90 degrees in said angle of incidence which is within a second plane perpendicular to the first plane and to the substrate.

Preferably, the light control means controls the direction of the radiant light so that within a first plane containing the direction of alignment of the liquid crystal and perpendicular to the first substrate and within a second plane perpendicular to the substrate and to the first plane, the total quantity of incident light which is within the range of at least the predetermined angle to not greater than 90 degrees in said angle of incidence is less than the total quantity of incident light which is within the range of at least 0 degree to not greater than the predetermined angle in said angle of incidence.

BRIEF DESCRIPTION OF THE DRAWINGS

FIG. 1 is a sectional view schematically showing the construction of a liquid crystal display device according to a first embodiment of the invention.

FIG. 2 is a sectional view schematically showing the construction of a liquid crystal display device according to a second embodiment of the invention.

FIG. 3 is a sectional view schematically showing the construction of a liquid crystal display device according to a third embodiment of the invention.

FIG. 4 are graphs showing examples of distributions of angles at which light is incident on the liquid crystal display device of the third embodiment of the invention.

FIG. 5 includes sectional views schematically showing the construction of a conventional liquid crystal display device, (a) and (b) showing a white display state and a black display state, respectively.

FIG. 6 is a diagram for illustrating leakage of light due to scattering in the interior of the liquid crystal display device.

BEST MODE FOR CARRYING OUT THE INVENTION

Embodiments of the present invention will be described below with reference to the drawings.

(Embodiment 1)

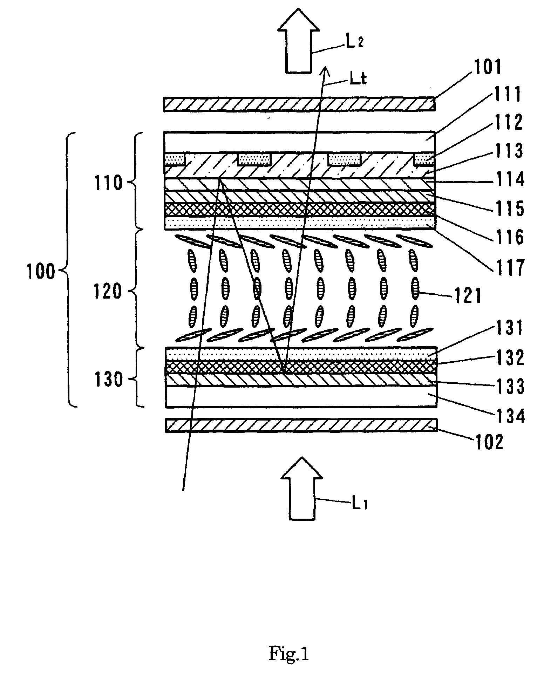

FIG. 1 is a sectional view schematically showing the construction of a liquid crystal display device according to a first embodiment of the invention. The liquid crystal display device according to this embodiment comprises a liquid crystal panel 100 and polarizers 101 and 102. The liquid crystal panel 100 comprises an emergent-side substrate assembly 110 composes of a glass substrate 111, a black matrix 112, a color filter layer 113, an overcoat layer 114, a transparent electrode 115, a retardation layer 116 and an alignment film 117; an incident-side substrate assembly 130 composed of an alignment film 131, a retardation layer 132, a transparent electrode 133 and a glass substrate 134; and a liquid crystal layer 120 sandwiched between these substrate assemblies and comprising liquid crystal molecules 121 to be brought into a bend alignment by being subjected to an initialization voltage. The liquid crystal panel 100 is sandwiched between the two polarizers 101 and 102. These two polarizers 101 and 102 are arranged in a cross Nicol relation. In the case where the liquid crystal panel is of the active matrix type, the incident-side substrate assembly 130 comprises a TFT (not shown).

As in FIG. 5, the light L1 incident on the polarizer 102 passes through the panel in the order of the incident-side substrate assembly 130, the liquid crystal layer 120 and the emergent-side substrate assembly 110, and the quantity of emergent light L2 to be output is controlled by the voltage applied across the transparent electrodes 115 and 133. The refractive index distribution of the retardation layers 116 and 132 is so designed that the overall retardation value for the light passing through the retardation layer 132, the liquid crystal layer 120 and the retardation layer 116 each once will be nearly zero when the black display is provided.

The foregoing definition of contrast indicates that the quantity of transmitted light for giving the black display exerts the greatest influence on contrast, so that the quantity of light when giving the black display will be described below. The arrangement of liquid crystal molecules 121 shown in FIG. 1 is an alignment state resulting from the application of a voltage higher than in the normally white display mode to produce the black display. As in the state shown in FIG. 5, the liquid crystal molecules 121 in the central portion of the liquid crystal layer 120 are almost all oriented in a direction perpendicular to the glass substrate 111, etc., whereas the liquid crystal molecules 121 in the vicinity of the interface between the layer 120 and the alignment film 117 or 131 are generally parallel to, or inclined at an angle of several degrees to about 30 degrees with, the glass substrate 111, etc. due to the restraining force of the interface.

A case of internal reflection will be considered. Suppose the light Lt passing through the liquid crystal layer 120, the retardation layer 116, etc. is reflected at the interface between the overcoat layer 114 and the color filter layer 113, passes through the retardation layer 116, the liquid crystal layer 120, etc. again, is reflected at the interface between the retardation layer 132 and the transparent electrode 133 of the incident-side substrate assembly 110, passes through the emergent-side substrate assembly 110 and emerges from the polarizer 101. The light L1 to be emergent after being reflected twice inside the liquid crystal panel 100 in this case passes through the liquid crystal layer 120 three times, the retardation layer 132 three times and the retardation layer 116 three times, whereas since each of the retardation layers 116, 132 is positioned between the liquid crystal layer 120 and the glass substrate 111 or 134, the overall retardation value given to the light Lt by these components is approximately zero. Thus, in giving the black display, the light passing through the optical path involving internal reflection twice is almost unlikely to emerge from the polarizer 101 like the light not reflected internally to obviate the reduction of front contrast.

According to the publication No. 673 wherein a black matrix is provided for cutting the light Lt inside the liquid crystal display device, the portion of light Lt not impinging on the black matrix upon reflection inside the liquid crystal panel 100 will emerge as leak light, whereas the present embodiment, unlike the device of the publication No. 673, is adapted to suppress the emergence of the light reflected inside the panel 100 as leak light regardless of the presence or absence of the black matrix or of the position thereof.

Stated more specifically, the quantity of light to be transmitted when giving the black display can be effectively reduced to fully diminish the impairment of front contrast if the combined retardation value of the retardation layers 116 and 132 is at least about 10 nm to not greater than 120 nm and further when the retardation value of each of the retardation layers 116 and 132 is at least about 5 nm to not greater than 60 nm.

When the liquid crystal display device according to the present embodiment is fabricated as a display panel comprising a TFT, a color filter, etc., for actual use as a monitor or TV set, a front contrast value of about 300 can be realized.

Although reflection at the interface between the overcoat layer 114 and the color filter layer 113 and at the interface between the retardation layer 132 and the transparent electrode 133 has been described above, the internal reflection occurs at almost all the interfaces between the component layers . With the liquid crystal panel 100 shown in FIG. 1, however, the light reflected at any of the interfaces between the retardation layer 116 and the polarizer 101 and reflected at any of the interfaces between the retardation layer 132 and the polarizer 102 always passes through the liquid crystal layer 120, and the retardation layers 116 and 132 the same number of times, so that the overall retardation value of the optical path is approximately zero. Thus, the light internally reflected when giving the black display is almost unlikely to emerge from the polarizer 101. This diminishes the impairment of front contrast.

In contrast with the internal reflection occurring twice as described above, the incidence of reflection occurring an even number of times of at least four times is low and the quantity of light involved is small, but the overall retardation value of the optical path in such a case is also approximately zero.

Although it is most preferable to position the retardation layers 116 and 132 adjacent to the respective alignment films 117 and 131 as shown in FIG. 1 so that an overall retardation value of about zero will be available in the largest number of internal reflection modes, the retardation layer may be provided between the transparent electrode 115 and the substrate 111 or between the electrode 133 and the substrate 134. The overall retardation value of the optical path in this case will not be about zero for the light reflected at interfaces between the retardation layers 116 and 132, whereas the overall retardation value of the optical path will be about zero for the light reflected at interfaces which are positioned externally of the compensators 116 and 132, hence the advantage of diminished leakage of light.

With the embodiment described above, the retardation layers 116 and 132 are each in the form of a single layer, but these layers may each comprise a plurality of layers.

The optical retardation layers 116 and 132 need not always be arranged symmetrically about the liquid crystal layer 120. For example, the retardation layer 116 may be interposed between the transparent electrode 115 and the alignment film 117, with the retardation layer 132 disposed between the transparent electrode 133 and the substrate 134.

While the alignment films 117 and 131 act to align the liquid crystal molecules of the liquid crystal layer 120 in a specified direction, these films 117 and 131 can be given birefringence characteristics for the adjustment of the distribution of refractive index so as to serve the whole or part of the function of the retardation layers 116 and 132 of compensating for the retardation due to the liquid crystal layer 120. Since the number of interfaces serviceable as reflecting planes then decreases, this modification produces a greater effect in reducing the leakage of light than when the retardation layers 116 and 132 are provided independently of the alignment films 117 and 131.

Similarly, the function of the retardation layers 116 and 132 can wholly or partly be given to the color filter layer 113 for imparting colors to the light passing through the liquid crystal layer 120, the transparent electrodes 115 and 133 provided on the respective glass substrates 111 and 134, the overcoat layer 114 covering the glass substrate 111, a flattening layer (not shown, see the publication of JP-A No. 2000-321588, FIG. 8) sandwiched between the transparent electrode 133 (or 115) and scanning signal wiring (not shown) and video signal wiring (not shown) so as to provide the scanning signal wiring and the video signal wiring, and the electrode 133 (or 115) in different layers, the glass substrates 111 and 134, or a combination of such components.

It is also possible to insert layers of plastic or like resin or high-molecular-weight liquid crystal, or liquid crystal molecules other than those in the bend alignment and to be driven, into the panel anew and give the inserted layers the function of the retardation layers 116 and 132.

Although the structure shown in FIG. 1 includes the black matrix 112 and the color filter layer 113, these components can be dispensed with, or the two glass substrates 111 and 134 can be replaced by thin films of plastic or the like or components in film shape.

The publication of JP-A No. 1996-104609 (hereinafter referred to as "publication No. 609") also discloses a liquid crystal display device comprising a polarizer, a glass substrate, a retardation film and liquid crystal which are arranged in superposed layers in this order. However, publication No. 609 discloses or suggests nothing about retardation, nor does the publication disclose or suggest anything about the problem of the leakage of light due to internal reflection that would occur if the liquid crystal layer has a retardation when giving the black display.

(Embodiment 2)

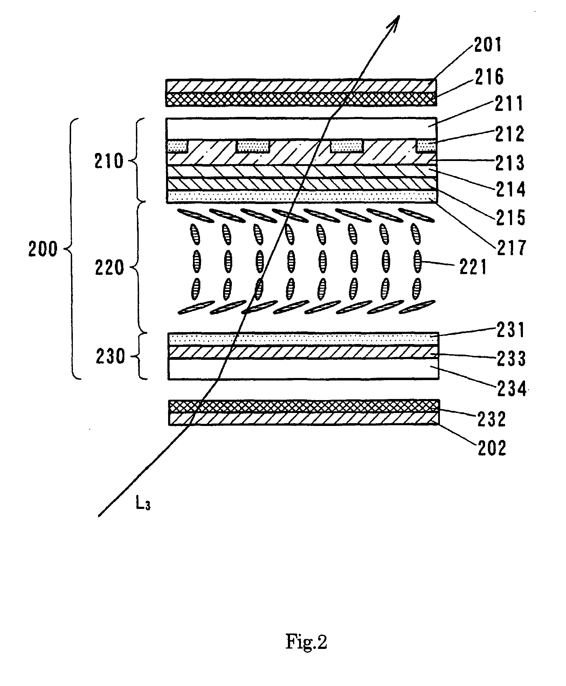

FIG. 2 is a sectional view schematically showing the construction of a liquid crystal display device according to a second embodiment of the invention. The liquid crystal display device according to this embodiment comprises a liquid crystal panel 200, polarizers 201 and 202 and retardation film 216 and 232 The liquid crystal panel 200 comprises an emergent-side substrate assembly 210 composes of a glass substrate 211, a black matrix 212, a color filter layer 213, an overcoat layer 214, a transparent electrode 215 and an alignment film 217; an incident-side substrate assembly 230 composed of an alignment film 231, a transparent electrode 233 and a glass substrate 234; and a liquid crystal layer 220 sandwiched between these substrate assemblies and comprising liquid crystal molecules 221 to be brought into a bend alignment by being subjected to an initialization voltage. The liquid crystal panel 200 is sandwiched between the two polarizers 201 and 202 which are arranged in a cross Nicol relation. The color filter layer 213 is one comprising a pigment dispersed therein in the form of aggregate particles at least 0.01 μm to not greater than 0.1 μm in size.

With reference to FIG. 2, oblique incident light L3 passes through inside layers of the panel 200 and reaches the color filter layer 213. If this layer is a conventional color filter layer of the pigment dispersion type, the light will be scattered at this position. The smaller the particle size of the pigment of the color filter layer 213, the less likely to occur is scattering, but scattering is fully avoidable if the particle size of the pigment is generally not greater than the wavelength of the light to be incident on the layer. The color filter layer 213 in the liquid crystal panel 200 comprises a pigment dispersed therein in the form of aggregate particles which are at least 0.01 μm to not greater than 0.1 μm in size, with the result that the incident light L3, which is visible light ranging from about 400 to about 800 nm in wavelength, passes as it is through this layer almost without being scattered and obliquely passes through the retardation film 216. Accordingly, little or no scattered light will occur although scattered light is responsible for impaired front contrast and attributable to the overall retardation value of the optical path which is not zero and which would pass through the polarizer 201 perpendicular thereto (forward direction), consequently making it possible to maintain front contrast at a very high value.

The color filter layer 213 need not always be disposed at the position shown in FIG. 2, but the effect to diminish the impairment of front contrast conventionally occurring is available also when the filter layer 213 is disposed between the liquid crystal layer 220 and the retardation film 216 or between the liquid crystal layer 220 and the retardation film 232.

The retardation films 216 and 232 need not always be arranged externally of the liquid crystal panel 200 as shown in FIG. 2, but the effect to diminish the impairment of front contrast conventionally occurring is available also when the color filter layer 213 is positioned between the liquid crystal layer 220 and the retardation film 216 or between the liquid crystal layer 220 and the retardation film 232, with the retardation films 216 and 232 arranged inside the liquid crystal panel 200 in the same manner as shown in FIG. 1.

Usable as the color filter layer 213 is a color filter layer wherein a particulate pigment or the like is not used. For example, usable are a dye color filter and a color filter resorting to the interference of light. Also usable are a color filter comprising a pigment and a dye as mixed therewith, and a color filter wherein other chromogenic material is incorporated.

When the liquid crystal display device according to the present embodiment is fabricated as a display panel comprising a TFT, a color filter, etc., for actual use as a monitor or TV set, a front contrast value of about 500 to about 800 can be realized.

(Embodiment 3)

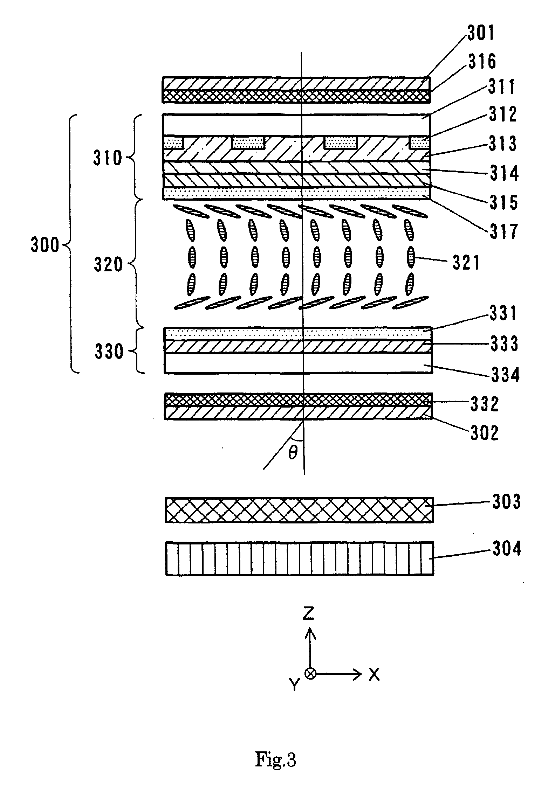

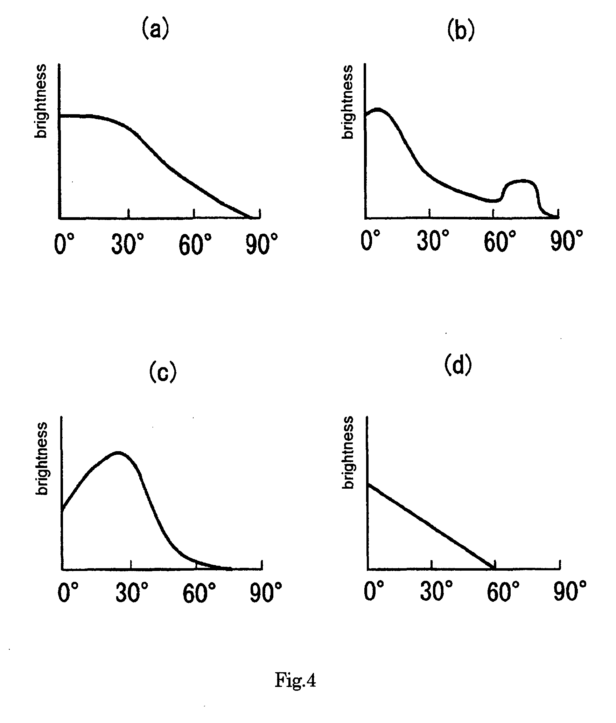

FIG. 3 is a sectional view schematically showing the construction of a liquid crystal display device according to a third embodiment of the invention. The liquid crystal display device according to this embodiment comprises a liquid crystal panel 300 having the same construction as the one shown in FIG. 2, polarizers 301 and 302, retardation films 316 and 332, an optical film 303 and a backlight 304. As shown in FIG. 4, the optical film 303 controls the direction of the light emanating from the backlight 304 and passing through the optical film 303 so that the quantity of component of incident light which is greater than about 30 degrees in the angle of incidence will be up to about 1/2 of the quantity of components of the incident light in all directions.

The black display to be provided by the arrangement described will be considered. Incident light having an angle of incidence θ1 of about 0 to about 30 degrees and included in the light emanating from the backlight 304 and having its direction controlled by the optical film 303 passes through the liquid crystal layer 320 at an angle θ2 of about 0 to about 19 degrees according to Snell's law.

As already described with reference to FIG. 6, the light incident on the liquid crystal layer along a path L4, scattered at point A and emerging toward the front along a path L7 will be considered. The overall retardation value R given to the scattered light is R = Δn•(d0 - d1) as previously mentioned. When the angle of incidence θ1 is in the range of about 0 to about 30 degrees, the difference between d0 and d1 is small, so that if the angle of incidence θ1 is in this range, R is also small and the leakage of light is not very great.

For example, when the polarizers 301 and 302 are arranged in a cross Nicol relation and when the initial state of the liquid crystal panel 300 is normally white, the incident light having an angle of incidence θ1 of about 0 to about 30 degrees is almost free from alteration of the polarization plane if the voltage for the black display is applied to the liquid crystal layer, so that almost no light passes through the polarizer 301 to result in no impairment of the front contrast. Experiments have also revealed that oblique light with an angle of 0 to about 30 degrees is almost unlikely to lower the front contrast.

On the other hand, light having an angle of incidence of greater than about 30 degrees and included in the light having its direction controlled by the optical film 303 passes through the liquid crystal at an angle of about 20 to about 42 degrees and is therefore given a great phase difference by the liquid crystal layer 320.

To describe in greater detail, the light incident on the liquid crystal layer along a path L4, scattered at point A and emerging toward the front along a path L7 will be considered as stated above. The overall retardation value R given to the scattered light is R = Δn•(d0 - d1) as previously mentioned. When the angle of incidence θ1 is greater than about 30 degrees, the difference between d0 and d1 becomes also greater, so that if the angle of incidence θ1 is in this range, R becomes also greater, hence greater leakage of light. The light with an angle of incidence θ1 in this range is elliptically polarized or otherwise altered in polarization plane to pass through the polarizer 301, entailing lower contrast.

The greater the angle of incidence θ1, the greater the quantity of leakage of light, whereas with an increase in the angle of incidence θ1, the probability of the light becoming scattered toward the forward direction conversely decreases. Thus the degree of contribution of the light with an angle of incidence θ1 to the impairment of the front contrast is not dependent on the angle but can be considered almost definite. Accordingly if the quantity of components of light with an angle of incidence θ1 of greater than 30 degrees is limited to not greater than about 1/2 of the quantity of components of incident light in all directions as in the liquid crystal display device 300 of the present embodiment, the contribution to the impairment of total contrast is diminished to about 3/4 of the impairment that would result when the emanating light of the backlight is emitted uniformly in all directions and becomes incident on the liquid crystal panel 300.

FIGS. 4, (a) to (d) are diagrams showing examples of distributions of angles of diffusion, i.e., of angles θ1 of incidence on the panel 300, of the light emanating from the backlight 304 and passing through the optical film 303. The diagrams all reveal that the quantity of component of the light with an angle of incidence θ1 of greater than 30 degrees is not greater than 1/2 of the quantity of components of light in all directions, indicating that high front contrast can be realized.

A prism sheet, diffusion sheet or like light collecting sheet is usable as the optical film 303. A plurality of optical sheets 303 are also usable.

The impairment of contrast can be diminished similarly also by giving the optical film 303 such light control characteristics that the quantity of component of light with an angle of incidence θ1 of at least 40 degrees will be about 1/3 of the quantity of components of light in all directions, or that the quantity of component of light with an angle of incidence θ1 of at least 50 degrees will be about 1/4 of the quantity of components of light in all directions.

The impairment of contrast can be diminished similarly also by giving the optical film 303 such light control characteristics that no light components will occur which have an angle of incidence θ1 of not small than a predetermined angle, for example, not smaller than 30 degrees.

While no consideration is given to the direction of alignment of liquid crystal molecules 321 in the foregoing description, it is now assumed that the direction of alignment of the liquid crystal molecules 321 of the layer 320 is X-axis, the direction perpendicular to the direction of liquid crystal alignment within the plane of the substrate 334 is Y-axis, and the axis perpendicular to both X-axis and Y-axis is Z-axis (see FIG. 3). Still higher contrast can be realized by so designing the optical film 303 that the quantity of component of light with an angle of incidence of at least about 30 degrees in the distribution of incidence angles of light in the YZ plane will be smaller than the quantity of components of light with an angle of incidence of at least about 30 degrees in the distribution of incidence angles of light in the XZ plane.

The impairment of contrast can be diminished further if the quantity of component of light with an angle of incidence of at least about 30 degrees in each of the distributions of incidence angles of light in the YZ plane and in the XZ plane is not greater than 1/2 of the quantity of components of incident light in all directions.

With the first to third embodiments of the invention described above, the two polarizers 101 and 102, 201 and 201, or 301 and 303 are arranged in a cross Nicol relation, whereas liquid crystal display devices can be constructed in the same manner as above to realize similarly high front contrast if the polarizing axes of the respective polarizers are parallel in an open Nicol arrangement.

Although liquid crystal display devices wherein the liquid crystal layer has a retardation when giving a black display have been described above with reference to liquid crystal display devices of OCB mode, the invention is not limited to liquid crystal display devices of OCB mode but can be embodied as liquid crystal display devices in the same manner as above to similarly realize high front contrast insofar as the liquid crystal layer therein has a retardation when providing the black display. According to the invention, the liquid crystal layer is preferably at least about 50 nm to not greater than about 120 nm, more preferably at least about 70 nm to not greater than about 100 nm, in retardation value when giving the black display.

INDUSTRIAL APPLICABILITY

The invention provides a liquid crystal display device wherein leakage of light is diminished that would entail impaired contrast and which realizes display panels and optical switching devices of high contrast comprising a TFT and a color filter.

The liquid crystal display device of the invention can be of the field sequential color type wherein red, green and blue backlights are turned on in succession for color displays without using the color filter layer 213 insofar as such a modification is not in conflict with the essential feature of the invention.

LIST OF REFERENCE NUMERALS AND SIGNS IN THE DRAWINGS

100 liquid crystal panel
101, 102 polarizer
110 emergent-side substrate assembly
111 glass substrate
112 black matrix
113 color filter layer
114 overcoat layer
115 transparent electrode
116 retardation layer
117 alignment film
120 liquid crystal layer
121 liquid crystal molecules
130 incident-side substrate assembly
131 alignment film
132 retardation layer
133 transparent electrode
134 glass substrate
200 liquid crystal panel
201, 202 polarizer
210 emergent-side substrate assembly
211 glass substrate
212 black matrix
213 color filter layer
214 overcoat layer
215 transparent electrode
216 retardation film
217 alignment film
220 liquid crystal layer
221 liquid crystal molecules
230 incident-side substrate assembly
231 alignment film
232 retardation film
233 transparent electrode
234 glass substrate
300 liquid crystal panel
301, 302 polarizer
303 optical film
304 backlight
310 emergent-side substrate assembly
311 glass substrate
312 black matrix
313 color filter layer
314 overcoat layer
315 transparent electrode

316 retardation film
317 alignment film
320 liquid crystal layer
321 liquid crystal molecules
330 incident-side substrate assembly
331 alignment film
332 retardation film
333 transparent electrode
334 glass substrate
500 liquid crystal panel
501, 504 polarizer
502, 503 retardation film
510 emergent-side substrate assembly
511 glass substrate
512 transparent electrode
513 alignment film
520 liquid crystal layer
521 liquid crystal molecules
530 incident-side substrate assembly
531 alignment film
532 transparent electrode
533 a glass substrate
L1,L3,L4,L6 incident light
L2, L5, L7 emergent light
Lt optical path with internal reflections
$\theta$, $\theta_1$ angle of incidence
$\theta_2$ angle of transmission
$d_0$ thickness of a retardation film
$d_1$ optical path length in a retardation film

**Claims**

1. A liquid crystal display device comprising:

   two substrates,
   two electrodes arranged between the substrates,
   a liquid crystal layer disposed between the electrodes and having a retardation when giving a black display, and
   at least one retardation layer positioned between the substrate and the liquid crystal layer, the sum of the retardation value of the liquid crystal layer and the retardation values of the retardation layers beingapproximately zero for light incident on the substrate when a voltage for giving the black display is applied across the electrodes.

2. A liquid crystal display device according to claim 1 wherein the liquid crystal layer comprises liquid crystal molecules in an OCB mode.

3. A liquid crystal display device according to claim 1 which comprises two alignment films having the liquid crystal layer sandwiched therebetween, said at least one retardation layer being disposed adjacent to the alignment film at one side thereof not in contact with the liquid crystal layer.

4. A liquid crystal display device according to claim 1 wherein said at least one retardation layer is a color filter layer.

5. A liquid crystal display device according to claim 1 wherein said at least one retardation layer is an overcoat layer.

6. A liquid crystal display device according to claim 1 wherein said at least one retardation layer is a flattening layer.

7. A liquid crystal display device according to claim 1 wherein said at least one retardation layer is an alignment film.

8. A liquid crystal display device according to claim 2 which comprises two retardation layers, each of the retardation layers being disposed adjacent to each of the alignment films at one side thereof not in contact with the liquid crystal layer.

9. A liquid crystal display device comprising:

   two substrates,
   two electrodes arranged between the substrates, and
   a liquid crystal layer disposed between the electrodes and having a retardation when giving a black display,
   the sum of the retardation value of the liquid crystal layer and the retardation values of the electrodes being approximately zero for light incident on the substrate when a voltage for giving the black display is applied across the electrodes.

10. A liquid crystal display device comprising:

    two substrates,
    two electrodes arranged between the substrates,
    a liquid crystal layer disposed between the electrodes and having a retardation when giving a black display,
    a retardation layer, and
    a color filter layer disposed between the liquid crystal layer and the retardation layer and comprising a pigment dispersed therein, the pigment being in the form of aggregate particles at least 0.01 μm to not greater than 0.1 μm in size.

11. A liquid crystal display device comprising:

    two substrates,
    two electrodes arranged between the substrates,
    a liquid crystal layer disposed between the electrodes and having a retardation when giving a black display,
    a retardation layer, and
    a color filter layer disposed between the liquid crystal layer and the retardation layer and comprising a dye.

12. A liquid crystal display device comprising:

    two substrates,
    two electrodes arranged between the substrates,
    a liquid crystal layer disposed between the electrodes and having a retardation when giving a black display,
    a retardation layer,
    a backlight, and
    light control means for controlling the direction of radiant light from the backlight, the light control means being operable to control the direction of the radiant light so that the total quantity of incident light having an angle of incidence within the range of at least a predetermined angle to not greater than 90 degrees, with respect to the direction of a normal to the first of the substrates disposed closer to the backlight is less than the total quantity of light having an angle of incidence with respect to said direction of the normal within the range of at least 0 degree to less than the predetermined angle, the predetermined angle being at least zero degree to not greater than 30 degrees.

13. A liquid crystal display device according to claim 12 wherein the light control means controls the direction of the radiant light so that the total quantity of incident light which is within the range of at least the predetermined angle to not greater than 90 degrees in said angle of incidence which is within a first plane containing the direction of alignment of the liquid crystal and perpendicular to the first substrate is less than the total quantity of incident light which is within the range of at least the predetermined angle to not greater than 90 degrees in said angle of incidence which is within a second plane perpendicular to the first plane and to the substrate.

14. A liquid crystal display device according to claim 12 wherein the light control means controls the direction of the radiant light so that within a first plane containing the direction of alignment of the liquid crystal and perpendicular to the first substrate and within a second plane perpendicular to the substrate and to the first plane, the total quantity of incident light which is within the range of at least the predetermined angle to not greater than 90 degrees in said angle of incidence is less than the total quantity of incident light which is within the range of at least 0 degree to not greater than the predetermined angle in said angle of incidence.

Fig.1

Fig.2

Fig.3

(a)

brightness

0°    30°    60°    90°

(b)

brightness

0°    30°    60°    90°

(c)

brightness

0°    30°    60°    90°

(d)

brightness

0°    30°    60°    90°

Fig.4

Fig.5

Fig.6